# EUROPÄISCHE PATENTSCHRIFT

(11) **EP 3 889 000 B1**
(45) Veröffentlichungstag und Bekanntmachung des Hinweises auf die Patenterteilung: **26.04.2023**
(21) Anmeldenummer: 21160920.1
(22) Anmeldetag: 05.03.2021
(51) Int. Cl.: B60Q 3/47, B61D 29/00

(54) **VERFAHREN ZUM BETREIBEN EINER LEUCHTE UND SCHIENENFAHRZEUG**
METHOD FOR OPERATING A LIGHT AND RAIL VEHICLE
PROCÉDÉ DE FONCTIONNEMENT D'UN LUMINAIRE ET VÉHICULE FERROVIAIRE

(30) Priorität: 01.04.2020 DE 102020204223
(43) Veröffentlichungstag der Anmeldung: 06.10.2021
(73) Patentinhaber: Siemens Mobility GmbH, 81739 München (DE)
(72) Erfinder: Schiefer, Benno, 40233 Düsseldorf (DE)
(74) Vertreter: Siemens Patent Attorneys

(56) Entgegenhaltungen:
- DE-A1-102009 046 628
- DE-A1-102014 208 221
- DE-A1-102014 222 204

## Beschreibung

Es werden ein Verfahren zum Betreiben einer Leuchte und ein Schienenfahrzeug angegeben.

Die Erfindung bezieht sich auf ein Verfahren zum Betreiben einer Leuchte nach dem Oberbegriff von Anspruch 1, wonach die Leuchte in einem Innenraum des Schienenfahrzeuges angeordnet ist und im Betrieb einen Bereich des Innenraums beleuchtet, das Schienenfahrzeug ein Fenster umfasst, über das von außerhalb des Schienenfahrzeuges in den Innenraum hineingesehen werden kann, der Innenraum eine Decke aufweist, ein Belegungsgrad des Innenraums mit Fahrgästen ermittelt wird und die Leuchte in Abhängigkeit von dem ermittelten Belegungsgrad betrieben wird, wobei das von der Leuchte emittierte Licht repräsentativ für den Belegungsgrad des Innenraums ist.

Ein solches Verfahren zum Betreiben einer Leuchte ist aus der DE 10 2009 046628 A1 bekannt, wobei im Deckenbereich eine in ihrer Farbgebung ansteuerbare LED-Lichtleiste zum Einsatz kommt. Nach der DE 10 2014 208221 A1 sind in einem Doppelstockwagen im Treppenbereich Beleuchtungseinrichtungen vorgesehen, die einen Besetzungsgrad in einem über die Treppe erreichbaren Innenraum wiedergeben.

Eine zu lösende Aufgabe besteht darin, ein Verfahren anzugeben, mit dem Personen, die sich außerhalb eines Schienenfahrzeuges auf einem Bahnsteig befinden, auf einfache Weise Informationen über den Belegungsgrad eines Innenraums, insbesondere eines Abteils, in dem Schienenfahrzeug erkennen können. Eine weitere zu lösende Aufgabe besteht darin, ein Schienenfahrzeug anzugeben, mit dem ein solches Verfahren durchführbar ist.

Diese Aufgaben werden unter anderem durch die Gegenstände des Patentanspruchs 1 und des Patentanspruchs 10 gelöst. Vorteilhafte Ausgestaltungen und Weiterbildungen sind Gegenstand der weiteren abhängigen Patentansprüche und gehen weiterhin aus der nachfolgenden Beschreibung und den Zeichnungen hervor. Zunächst wird das Verfahren zum Betreiben einer Leuchte angegeben. Die Leuchte befindet sich in einem Innenraum eines Schienenfahrzeugs, insbesondere in einem Waggon oder Abteil des Schienenfahrzeuges. Bei dem Schienenfahrzeug handelt es sich insbesondere um einen Personenzug.

Gemäß zumindest einer Ausführungsform beleuchtet die Leuchte im Betrieb einen Bereich des Innenraums. Das heißt, die Leuchte ist auf einen Bereich in dem Innenraum, zum Beispiel auf eine Decke und/oder eine Seitenwand und/oder den Boden, gerichtet und beleuchtet diesen Bereich aus. Die Beleuchtung dieses Bereichs kann für einen Fahrgast innerhalb des Schienenfahrzeuges sichtbar sein. Das heißt, das von dem Bereich reflektierte Licht ist beispielsweise für einen Fahrgast auf einem Sitz in dem Innenraum sichtbar.

Das Schienenfahrzeug umfasst ein Fenster. Das Fenster ist insbesondere an einer Seitenwand des Schienenfahrzeuges angeordnet. Durch das Fenster kann von außerhalb des Schienenfahrzeuges in den Innenraum hineingesehen werden. Das Fenster weist beispielsweise eine Fläche von zumindest 1 m² oder zumindest 2 m² auf. Das Fenster befindet sich insbesondere auf Höhe von Sitzen in dem Schienenfahrzeug, so dass ein Fahrgast in dem Schienenfahrzeug, der auf einem solchen Sitz sitzt, durch das Fenster aus dem Schienenfahrzeug hinausblicken kann.

Das von der Leuchte im Betrieb emittierte Licht tritt teilweise über das Fenster aus dem Schienenfahrzeug aus und ist von außerhalb des Schienenfahrzeuges sichtbar. Das heißt, die Leuchte ist so in dem Innenraum des Schienenfahrzeuges angeordnet, dass das von der Leuchte emittierte Licht von außerhalb des Schienenfahrzeuges sichtbar ist. Die Decke reflektiert der von der Leuchte beleuchtete Bereich des Innenraums einen Teil dieses Lichtes, welches dann über das Fenster aus dem Schienenfahrzeug austritt. Bevorzugt ist ein Großteil des von der Leuchte stammenden und durch das Fenster hindurchtretenden Lichts zuvor von dem beleuchteten Bereich reflektiert worden.

Erfindungsgemäss umfasst das Verfahren einen Schritt, in dem ein Belegungsgrad des Innenraums mit Fahrgästen ermittelt wird. Das heißt, es wird ermittelt, wie viele Fahrgäste sich in dem Innenraum des Schienenfahrzeuges befinden. Der Belegungsgrad ist repräsentativ für diese Anzahl. Beispielsweise wird ermittelt, wie viele Sitze in dem Innenraum des Schienenfahrzeuges von Fahrgästen belegt sind.

Gemäß der Erfindung umfasst das Verfahren einen Schritt, in dem die Leuchte in Abhängigkeit von dem ermittelten Belegungsgrad betrieben wird, wobei das von der Leuchte emittierte Licht repräsentativ für den Belegungsgrad des Innenraums ist. Mit anderen Worten signalisiert das von der Leuchte emittierte Licht einem Fahrgast außerhalb und bevorzugt auch einem Fahrgast im Innenraum des Schienenfahrzeuges, wie stark der Innenraum bereits mit Fahrgästen belegt ist. Zum Betreiben der Leuchte umfasst das Schienenfahrzeug insbesondere eine Steuervorrichtung, die signaltechnisch mit der Leuchte verbunden ist und die Leuchte in Abhängigkeit von dem Belegungsgrad ansteuert/betreibt.

In mindestens einer Ausführungsform des Verfahrens zum Betreiben einer Leuchte ist die Leuchte in einem Innenraum des Schienenfahrzeuges angeordnet. Die Leuchte beleuchtet im Betrieb einen Bereich des Innenraums. Das Schienenfahrzeug umfasst ein Fenster, über das von außerhalb des Schienenfahrzeuges in den Innenraum hineingesehen werden kann. Das von der Leuchte im Betrieb emittierte Licht tritt teilweise über das Fenster aus dem Schienenfahrzeug aus und ist von außerhalb des Schienenfahrzeuges sichtbar. Bei dem Verfahren wird zunächst ein Belegungsgrad des Innenraums mit Fahrgästen ermittelt. Anschließend wird die Leuchte in Abhängigkeit von dem ermittelten Belegungsgrad betrieben, wobei das von der Leuchte emittierte Licht repräsentativ für den Belegungsgrad des Innenraums ist.

Der vorliegenden Erfindung liegt insbesondere die Idee zu Grunde, einem Fahrgast für einen Transport in einem Schienenfahrzeug bereits während sich der Fahrgast noch auf dem Bahnsteig befindet, zu signalisieren, wie stark ein Innenraum beziehungsweise Abteil oder Waggon des Schienenfahrzeuges bereits mit Fahrgästen belegt ist. Vorliegend wird dies dem Fahrgast durch ein Lichtsignal, was von einer Leuchte innerhalb des Innenraums emittiert wird und durch das Fenster nach außen dringt, signalisiert. Lichtsignale, insbesondere Farben, sind für die meisten Menschen intuitiv verständlich.

Gemäß zumindest einer Ausführungsform ist die Leuchte dazu eingerichtet, Licht verschiedener Farben zu emittieren. Beispielsweise umfasst die Leuchte dazu verschiedene LEDs, beispielsweise eine oder mehrere rote LEDs, eine oder mehrere grüne LEDs und eine oder mehrere blaue LEDs. Durch individuelles Ansteuern der LEDs können verschiedene Lichtfarben erzeugt werden. Zum Beispiel ist die Leuchte dazu eingerichtet, rotes Licht, gelbes und/oder oranges Licht und grünes Licht zu erzeugen.

Gemäß zumindest einer Ausführungsform sind unterschiedlichen Belegungsgraden des Innenraums unterschiedliche Farben zugeordnet. Beispielsweise ist einem niedrigen Belegungsgrad die Farbe Grün zugeordnet, einem mittleren Belegungsgrad die Farbe Gelb/Orange und einem hohen Belegungsgrad die Farbe Rot. Ein niedriger Belegungsgrad ist beispielsweise dadurch gekennzeichnet, dass höchstens 30 % der Plätze oder Sitze von Fahrgästen belegt sind. Ein mittlerer Belegungsgrad ist beispielsweise dadurch gekennzeichnet, dass höchstens 60 % und mehr als 30 % der Plätze oder Sitze belegt sind. Ein hoher Belegungsgrad ist beispielsweise dadurch gekennzeichnet, dass mehr als 60 % der Plätze oder Sitze belegt sind.

Gemäß zumindest einer Ausführungsform wird die Leuchte in Abhängigkeit von dem ermittelten Belegungsgrad des Innenraums so betrieben, dass die Leuchte Licht der dem Belegungsgrad zugeordneten Farbe emittiert. Für einen Fahrgast außerhalb des Schienenfahrzeuges, beispielsweise auf einem Bahnsteig, ist dann anhand der Farbe erkennbar, wie hoch der Belegungsgrad in dem Innenraum ist.

Gemäß zumindest einer Ausführungsform wird der Belegungsgrad des Innenraums mit Fahrgästen automatisiert ermittelt. Dazu sind in dem Innenraum bevorzugt Sensoren, wie Kameras und/oder Gewichtssensoren in Sitzen, angeordnet, mit denen der Belegungsgrad ermittelt wird.

Das von der Leuchte emittierte Licht trifft nicht direkt auf das Fenster. Dafür ist der von der Leuchte beleuchtete Bereich des Innenraums durch das Fenster hindurch von außerhalb des Schienenfahrzeuges sichtbar. Das heißt, das gesamte von der Leuchte stammende und durch das Fenster hindurchtretende Licht ist indirektes Licht, welches vor dem Hindurchtreten durch das Fenster von dem beleuchteten Bereich im Innenraum reflektiert wurde. Die Leuchte ist also nicht direkt auf das Fenster gerichtet. Dadurch wird eine Blendung von Fahrgästen außerhalb des Schienenfahrzeuges vermieden.

Gemäß zumindest einer Ausführungsform wird die Leuchte so betrieben, dass ein Weg beziehungsweise eine Richtung zu einem anderen Innenraum, zum Beispiel eines anderen Waggons, des Schienenfahrzeuges signalisiert wird. Insbesondere wird dies einer Person außerhalb des Schienenfahrzeuges signalisiert. In dem anderen Innenraum ist der Belegungsgrad geringer als in dem Innenraum, in dem die Leuchte angeordnet ist. Beispielsweise erzeugt die Leuchte ein Lauflicht, welches die Richtung zum nächsten freieren Innenraum anzeigt und von außerhalb des Schienenfahrzeuges sichtbar ist.

Um dies zu realisieren, umfasst das Schienenfahrzeug beispielsweise ein System, das signaltechnisch mit den Sensoren aus den verschiedenen Innenräumen beziehungsweise Waggons verbunden ist. Das System ist zum Beispiel dazu eingerichtet, die Belegungsgrade in den unterschiedlichen Innenräumen miteinander zu vergleichen und beispielsweise ein Belegungsgradgefälle entlang des Schienenfahrzeuges zu ermitteln. In Abhängigkeit von dem Vergleich oder dem Belegungsgradgefälle steuert dann die Steuervorrichtung die Leuchte an, um den Weg zu einem weniger belegten Innenraum anzuzeigen.

Der Innenraum weist eine Decke auf. Die Leuchte ist derart auf die Decke gerichtet, dass das von der Leuchte emittierte Licht an der Decke reflektiert wird und daraufhin über das Fenster aus dem Schienenfahrzeug austritt. Insbesondere ist das gesamte von der Leuchte stammende und durch das Fenster hindurchtretende Licht zuvor an der Decke reflektiert worden.

Die Leuchte ist beispielsweise so auf die Decke gerichtet, dass die Decke streifend beleuchtet wird. Das heißt, ein Einfallswinkel des von der Leuchte emittierten Lichts, gemessen zwischen der Hauptstrahlrichtung des Lichts und einer Flächennormalen auf die Decke, ist größer 0°, beispielsweise zumindest 45° oder zumindest 60°. Durch eine solche Beleuchtung der Decke wird eine Blendung der Fahrgäste innerhalb des Schienenfahrzeuges vermieden. Zudem wird so ein großer Bereich der Decke angestrahlt, was die Sichtbarkeit von außen verbessert.

Gemäß zumindest einer Ausführungsform weist die Decke einen konkav gekrümmten Abschnitt auf, auf den die Leuchte gerichtet ist. Der konkav gekrümmte Abschnitt bildet bevorzugt den Übergang zu einer Seitenwand des Innenraums. An dem konkav gekrümmten Abschnitt wird das Licht der Leuchte reflektiert und tritt daraufhin über das Fenster, bevorzugt auf der gegenüberliegenden Seite, aus dem Schienenfahrzeug aus. Insbesondere ist der konkav gekrümmte Abschnitt von außerhalb des Schienenfahrzeuges durch das Fenster hindurch sichtbar.

Gemäß zumindest einer Ausführungsform ist die Leuchte an einer Seitenwand des Schienenfahrzeuges angeordnet. Beispielsweise ist dann die Leuchte schräg nach oben auf die Decke, insbesondere auf den konkav gekrümmten Abschnitt der Decke, gerichtet. Die Leuchte kann von einer Blende überdeckt sein, sodass die Leuchte von außerhalb des Schienenfahrzeuges und/oder vom Innenraum aus nicht sichtbar ist.

Gemäß zumindest einer Ausführungsform ist die Leuchte länglich ausgebildet und umfasst eine Vielzahl von entlang einer Längsrichtung hintereinander aufgereihten LEDs. Beispielsweise erstreckt sich die Leuchte über die gesamte oder zumindest einen Großteil der Länge des Innenraums. Die Leuchte erstreckt sich beispielsweise parallel zu einer Kante zwischen der Decke und der Seitenwand. Die Längsrichtung, entlang der die LEDs aufgereiht sind, verläuft beispielsweise parallel zu einer Längsachse des Schienenfahrzeuges. Die Länge der Leuchte, über die die LEDs hintereinander aufgereiht sind, beträgt beispielsweise zumindest 1 m oder zumindest 3 m oder zumindest 5 m oder zumindest 10 m. Zum Beispiel weist die Leuchte zumindest zehn oder zumindest 50 LEDs auf.

Gemäß zumindest einer Ausführungsform umfasst die Decke eine Mehrzahl von Zierprofilen, die entlang einer Querrichtung nebeneinander angeordnet sind und sich jeweils entlang einer senkrecht zur Querrichtung verlaufenden Längsrichtung erstrecken. Die Längsrichtung der Zierprofile verläuft insbesondere parallel zur Längsrichtung der Leuchte. Die Zierprofile umfassen beispielsweise Kunststoff oder Metall, wie Aluminium oder Edelstahl, oder bestehen daraus. Zwischen den Zierprofilen können weitere LEDs angeordnet sein, die im Betrieb den Innenraum beleuchten.

Als nächstes wird das Schienenfahrzeug angegeben. Das Schienenfahrzeug umfasst einen Innenraum, insbesondere zur Aufnahme von Fahrgästen. In dem Innenraum des Schienenfahrzeuges sind beispielsweise mehrere Sitze angeordnet. Ferner umfasst das Schienenfahrzeug ein Fenster, über das von außerhalb des Schienenfahrzeuges in den Innenraum hineingesehen werden kann. Das Schienenfahrzeug umfasst eine Leuchte, die im Betrieb einen Bereich des Innenraums beleuchtet. Das Licht der Leuchte tritt über das Fenster aus dem Schienenfahrzeug aus. Ferner umfasst das Schienenfahrzeug eine Steuervorrichtung, die signaltechnisch mit der Leuchte verbunden ist. Die Leuchte und die Steuervorrichtung sind so eingerichtet, dass mit ihnen ein hier beschriebenes Verfahren durchführbar ist. Insbesondere sind die Leuchte und die Steuervorrichtung also so eingerichtet, dass die Leuchte in Abhängigkeit von einem ermittelten Belegungsgrad betreibbar ist, wobei das von der Leuchte emittierte Licht repräsentativ für den Belegungsgrad ist.

Bevorzugt umfasst das Schienenfahrzeug weiter einen oder mehrere Sensoren, mit denen der Belegungsgrad des Innenraums automatisiert ermittelt werden kann.

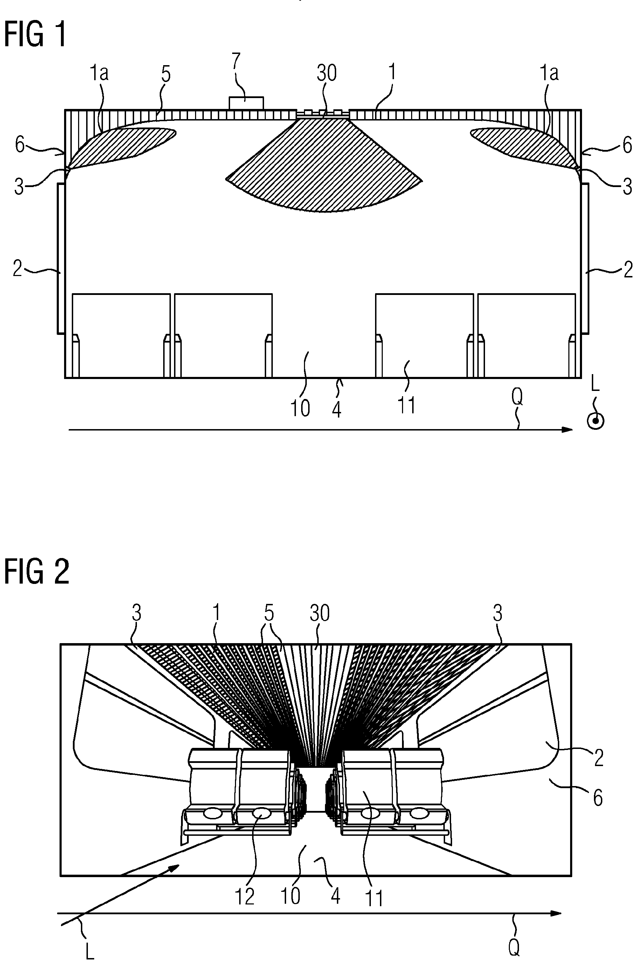

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei Figuren 1 bis 6 verschiedene Ansichten eines Ausführungsbeispiels eines Schienenfahrzeuges zeigen,

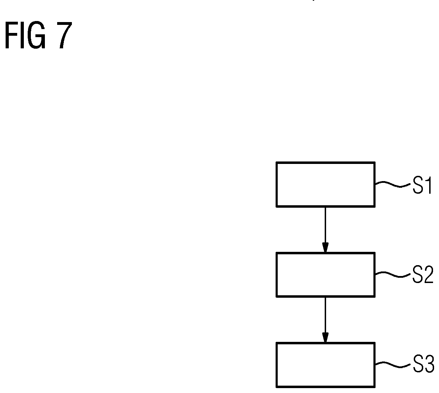

Figur 7 ein Ablaufdiagramm eines Ausführungsbeispiels des Verfahrens zeigt.

Figur 1 zeigt den Innenraum 10 eines Schienenfahrzeuges in Querschnittsansicht. Bei dem Schienenfahrzeug handelt es sich insbesondere um einen Personenzug. Der Innenraum 10 ist durch zwei Seitenwände 6, eine Decke 1 und einen Boden 4 begrenzt. In die Seitenwände 6 sind jeweils Fenster 2 eingebracht. An den Seitenwänden 6 sind Leuchten 3 angeordnet. In dem Innenraum sind außerdem Sitze 11 angeordnet, auf die sich die Fahrgäste setzen können. Außerdem ist eine Steuervorrichtung 7 vorgesehen, die signaltechnisch mit den Leuchten 3 verbunden ist und zur Ansteuerung der Leuchten 3 eingerichtet ist.

Die Decke 1 umfasst eine Mehrzahl von Zierprofilen 5, die in einer Querrichtung Q nebeneinander parallel angeordnet sind und sich jeweils entlang einer Längsrichtung L erstrecken. Die Decke 1 umfasst im Bereich der Übergänge zu den Seitenwänden 6 konkav gekrümmte Abschnitte 1a.

Die Leuchten 3 an den Seitenwänden 6 sind schräg nach oben auf die Decke 1 gerichtet und beleuchten im Betrieb die konkav gekrümmten Abschnitte 1a streifend. Das von den Leuchten 3 emittierte und an der Decke 1 reflektierte Licht tritt jeweils am gegenüberliegenden Fenster 2 aus dem Schienenfahrzeug aus und ist von außerhalb des Schienenfahrzeuges sichtbar. Dadurch, dass die Leuchten 3 auf die Decke 1 gerichtet sind, werden Fahrgäste innerhalb des Schienenfahrzeuges nicht geblendet und der Lichtaustrittseffekt auch nicht durch die Fahrgäste selbst verdeckt oder reduziert.

Die Decke 1 umfasst außerdem eine weitere Leuchte 30, die auf den Boden 4 gerichtet ist und zur Beleuchtung des Innenraums 10 dient.

Figur 2 zeigt den Innenraum 10 der Figur 1 nochmals in perspektivischer Ansicht. Hier ist zu erkennen, dass sich die Zierprofile 5 der Decke 1 jeweils entlang einer Längsrichtung L erstrecken. Die Leuchten 3 sowie die weitere Leuchte 30 erstrecken sich ebenfalls entlang der Längsrichtung L und nahezu über die gesamte Länge des Innenraums 10.

Diese Leuchten 3 können, der besseren Fertigbarkeit halber, auch zwischendurch geteilt, dabei aber weiterhin fluchtend angeordnet sein. Gleiches gilt für die weitere Leuchte 30.

Beispielsweise umfassen die Leuchten 3 und die weitere Leuchte 30 dazu jeweils eine Mehrzahl von LEDs, die entlang der Längsrichtung L hintereinander aufgereiht sind.

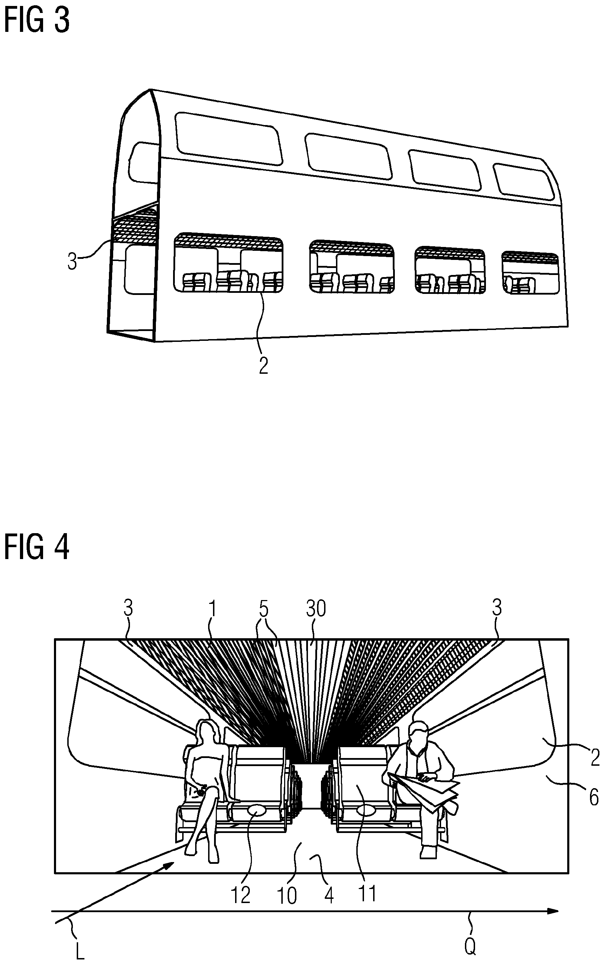

Wie in Figur 2 zu erkennen ist, sind in dem Innenraum 10 keine Fahrgäste. Durch Gewichtssensoren 12 in den Sitzen 11 und/oder über CCTV-Kameras und/oder über Zählsensoren in den Einstiegen und den einzelnen Abteilen und/oder über ein anderes geeignetes System wird erkannt, dass die Sitze 11 nicht besetzt sind und es wird ermittelt, dass der Belegungsgrad des Innenraums 10 mit Fahrgästen gering ist. In Abhängigkeit des ermittelten Belegungsgrads werden die Leuchten 3 nun betrieben beziehungsweise angesteuert. Vorliegend werden die Leuchten 3 bei diesem Belegungsgrad so betrieben, dass sie grünes Licht emittieren. Dieses grüne Licht ist durch die Reflexion an der Decke 1 von außerhalb des Schienenfahrzeuges durch die Fenster 2 hindurch sichtbar. Für einen Fahrgast auf einem Bahnsteig ist nun erkennbar, dass der Innenraum 10 beziehungsweise der zugeordnete Waggon noch freie Sitzplätze hat (siehe dazu auch Figur 3). Denkbar ist auch, dass der Belegungsgrad gemessen und ein entsprechendes Lichtsignal vorbereitet wird - in diesem Fall grün - dieses aber erst bei Einfahrt an einen Bahnhof ein- beziehungsweise umgeschaltet wird. Während der Fahrt wird beispielsweise "normales" weißes LED-Licht als indirekte Ambiente-Beleuchtung emittiert.

In der Figur 4 ist eine Position gezeigt, bei dem sich einige Personen in dem Innenraum 10 befinden. Die Personen sitzen auf den Sitzen 11, so dass von den Gewichtssensoren 12 erkannt wird, dass diese Sitze 11 belegt sind. Da nur ein Teil der Sitze 11 belegt ist, wird diesem Zustand ein mittlerer Belegungsgrad zugeordnet. In Abhängigkeit von diesem ermittelten mittleren Belegungsgrad werden nun die Leuchten 3 so angesteuert, dass sie gelbes oder oranges Licht emittieren. Dieses ist wiederum von außerhalb des Schienenfahrzeuges sichtbar, so dass ein Fahrgast auf dem Bahnsteig weiß, dass der Innenraum 10 beziehungsweise die darin vorgesehenen Sitze 11 bereits teilweise belegt sind und er besser einen anderen Waggon für den Zustieg wählt. Somit können sich die Fahrgäste bereits bei Einfahrt des Zuges am Bahnsteig sortieren und erheblich zu einer Fahrgastflussoptimierung beitragen.

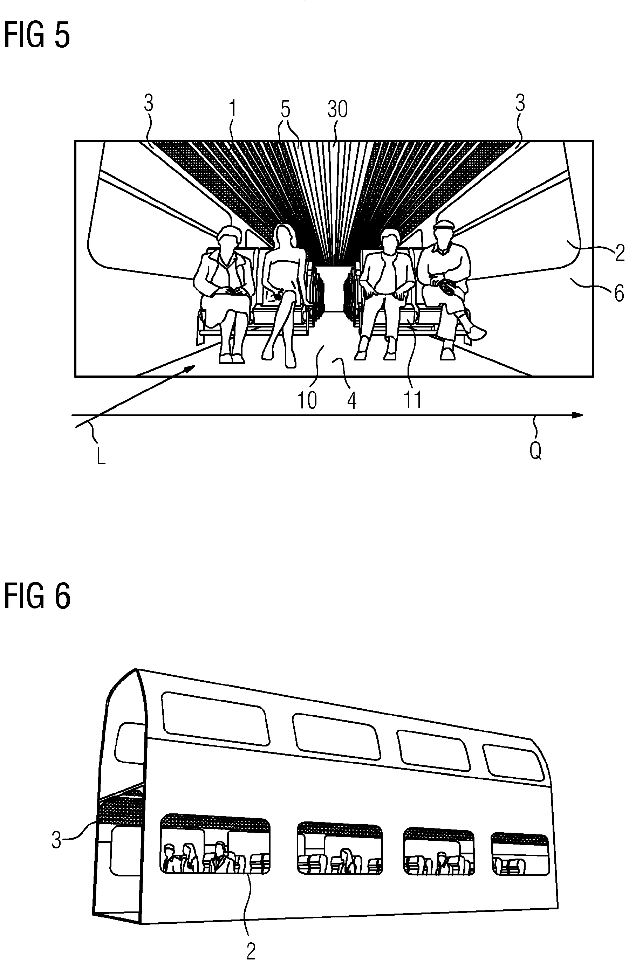

In der Figur 5 ist eine Position gezeigt, bei dem der Innenraum 10 des Schienenfahrzeuges voll mit Fahrgästen ist. Insbesondere ist jeder Sitz 11 mit einem Fahrgast belegt. Mithilfe der Gewichtssensoren 12 oder einem anderen geeigneten Mess-System wird nun ein hoher Belegungsgrad des Innenraums 10 ermittelt. In Abhängigkeit von diesem ermittelten hohen Belegungsgrad werden nun die Leuchten 3 so angesteuert, dass sie rotes Licht emittieren. Für einen Fahrgast außerhalb des Schienenfahrzeuges ist dadurch erkennbar, dass alle oder nahezu alle Sitze 11 belegt sind (siehe auch Figur 6).

Figur 7 zeigt ein Ablaufdiagramm zu einem Ausführungsbeispiel des Verfahrens zum Betreiben einer Leuchte 3. Beispielsweise handelt es sich dabei um das im Zusammenhang mit den Figuren 1 bis 6 beschriebene Schienenfahrzeug. Mit dem Verfahren wird dann zumindest eine der Leuchten 3 in dem Innenraum 10 des Schienenfahrzeuges betrieben.

In einem Schritt S1 des Verfahrens wird ein Belegungsgrad des Innenraums 10 mit Fahrgästen ermittelt. In einem Schritt S2 wird daraufhin in Abhängigkeit von dem ermittelten Belegungsgrad die Leuchte 3 betrieben, wobei das von der Leuchte 3 emittierte Licht repräsentativ für den Belegungsgrad des Innenraums 10 ist. Beispielsweise wird die Leuchte so betrieben, dass Sie für unterschiedliche Belegungsgrade Licht unterschiedlicher Farben emittiert.

In einem optionalen Schritt S3, der nach oder gleichzeitig mit dem Schritt S2 durchgeführt werden kann, wird die Leuchte dann noch so betrieben, dass einer Person außerhalb des Schienenfahrzeuges ein Weg zu einem anderen Innenraum des Schienenfahrzeuges signalisiert wird, in dem der Belegungsgrad geringer als in dem Innenraum ist, in dem die Leuchte 3 angeordnet ist. Beispielsweise wird die Leuchte 3 dafür so betrieben, dass sie ein Lauflicht entlang der Längsrichtung L erzeugt, das eine Richtung parallel oder antiparallel zur Längsrichtung L signalisiert. Hierzu ist beispielsweise vorgesehen, dass separate Messsysteme in einzelnen Waggons miteinander kommunizieren und ein Belegungsgefälle ermitteln, also von stark belegt zu wenig belegt, um dadurch die Richtung des Lauflichtes zu ermitteln und festzulegen.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

## Patentansprüche

1. Verfahren zum Betreiben einer Leuchte (3), wobei
- die Leuchte (3) in einem Innenraum (10) eines Schienenfahrzeuges angeordnet ist und im Betrieb einen Bereich des Innenraums (10) beleuchtet,
- das Schienenfahrzeug ein Fenster (2) umfasst, über das von außerhalb des Schienenfahrzeuges in den Innenraum (10) hineingesehen werden kann,
- der Innenraum (10) eine Decke (1) aufweist,
- ein Belegungsgrad des Innenraums (10) mit Fahrgästen ermittelt wird und
- die Leuchte (3) in Abhängigkeit von dem ermittelten Belegungsgrad betrieben wird, wobei das von der Leuchte (3) emittierte Licht repräsentativ für den Belegungsgrad des Innenraums (10) ist, **dadurch gekennzeichnet, dass**
- das von der Leuchte (3) im Betrieb emittierte Licht teilweise über das Fenster (2) aus dem Schienenfahrzeug austritt und von außerhalb des Schienenfahrzeuges sichtbar ist und
- die Leuchte (3) derart auf die Decke (1) gerichtet ist, dass das von der Leuchte (3) emittierte Licht an der Decke (1) reflektiert wird und daraufhin über das Fenster (2) aus dem Schienenfahrzeug austritt.

2. Verfahren nach Anspruch 1, wobei
- die Leuchte (3) dazu eingerichtet ist, Licht verschiedener Farben zu emittieren,
- unterschiedlichen Belegungsgraden des Innenraums (10) unterschiedliche Farben zugeordnet sind,
- die Leuchte (3) in Abhängigkeit von dem ermittelten Belegungsgrad des Innenraums (10) so betrieben wird, dass die Leuchte (3) Licht der dem Belegungsgrad zugeordneten Farbe emittiert.

3. Verfahren nach Anspruch 1 oder 2,
wobei der Belegungsgrad des Innenraums (10) mit Fahrgästen automatisiert ermittelt wird.

4. Verfahren nach einem der vorhergehenden Ansprüche, wobei
- das von der Leuchte (3) emittierte Licht nicht direkt auf das Fenster (2) trifft,
- der von der Leuchte (3) beleuchtete Bereich durch das Fenster (2) hindurch von außerhalb des Schienenfahrzeuges sichtbar ist.

5. Verfahren nach einem der vorhergehenden Ansprüche,
wobei die Leuchte (3) so betrieben wird, dass ein Weg zu einem anderen Innenraum des Schienenfahrzeuges signalisiert wird, in dem der Belegungsgrad geringer ist als in dem Innenraum (10), in dem die Leuchte (3) angeordnet ist.

6. Verfahren nach einem der Ansprüche 1 bis 5,
wobei die Decke (1) einen konkav gekrümmten Abschnitt (1a) aufweist, auf den die Leuchte (3) gerichtet ist.

7. Verfahren nach einem der vorhergehenden Ansprüche,
wobei die Leuchte (3) an einer Seitenwand (6) des Schienenfahrzeuges angeordnet ist.

8. Verfahren nach einem der vorhergehenden Ansprüche,
wobei die Leuchte (3) länglich ausgebildet ist und eine Vielzahl von entlang einer Längsrichtung (L) hintereinander aufgereihten LEDs umfasst.

9. Verfahren nach einem der vorhergehenden Ansprüche,
wobei die Decke (1) eine Mehrzahl von Zierprofilen (5) umfasst, die entlang einer Querrichtung (Q) nebeneinander angeordnet sind und sich jeweils entlang einer senkrecht zur Querrichtung (Q) verlaufenden Längsrichtung (L) erstrecken.

10. Schienenfahrzeug umfassend
- einen Innenraum (10) zur Aufnahme von Fahrgästen, wobei der Innenraum eine Decke aufweist,
- ein Fenster (2), über das von außerhalb des Schienenfahrzeuges in den Innenraum (10) hineingesehen werden kann,
- eine Leuchte (3), die im Betrieb einen Bereich des Innenraums (10) beleuchtet, wobei die Leuchte (3) derart auf die Decke (1) gerichtet ist, dass das Licht der Leuchte (3) über das Fenster (2) aus dem Schienenfahrzeug austritt,
- Mittel zum Erfassen des Belegungsgrads,
- eine Steuervorrichtung (7), die signaltechnisch mit der Leuchte (3) verbunden ist, wobei
- die Leuchte (3) und die Steuervorrichtung (7) so eingerichtet sind, dass mit ihnen ein Verfahren nach einem der vorhergehenden Ansprüche durchführbar ist.

## Claims

1. Method for operating a luminaire (3), wherein
- the luminaire (3) is arranged in an interior space (10) of a rail vehicle and illuminates a region of the interior space (10) during operation,
- the rail vehicle comprises a window (2) via which it is possible to look into the interior space (10) from outside the rail vehicle,
- the interior space (10) has a ceiling (1),
- a passenger occupancy rate of the interior space (10) is ascertained and
- the luminaire (3) is operated depending on the ascertained occupancy rate, wherein the light emitted by the luminaire (3) is representative of the occupancy rate of the interior space (10),
**characterized in that**
- the light emitted by the luminaire (3) during operation exits from the rail vehicle in part via the window (2) and is visible from outside the rail vehicle
and
- the luminaire (3) is directed towards the ceiling (1) in such a way that the light emitted by the luminaire (3) is reflected at the ceiling (1) and then exits from the rail vehicle via the window (2).

2. Method according to Claim 1, wherein
- the luminaire (3) is designed to emit light of different colours,
- different colours are associated with different occupancy rates of the interior space (10),
- the luminaire (3) is operated depending on the ascertained occupancy rate of the interior space (10) such that the luminaire (3) emits light of the colour associated with the occupancy rate.

3. Method according to Claim 1 or 2,
wherein the passenger occupancy rate of the interior space (10) is ascertained in an automated manner.

4. Method according to one of the preceding claims, wherein
- the light emitted by the luminaire (3) does not strike the window (2) directly,
- the region illuminated by the luminaire (3) is visible from outside the rail vehicle through the window (2).

5. Method according to one of the preceding claims,
wherein the luminaire (3) is operated such that a path to another interior space of the rail vehicle in which the occupancy rate is lower than in the interior space (10) in which the luminaire (3) is arranged is signalled.

6. Method according to one of Claims 1 to 5,
wherein the ceiling (1) has a concavely curved portion (1a) towards which the luminaire (3) is directed.

7. Method according to one of the preceding claims,
wherein the luminaire (3) is arranged on a side wall (6) of the rail vehicle.

8. Method according to one of the preceding claims,
wherein the luminaire (3) is of elongate design and comprises a large number of LEDs lined up one behind the other along a longitudinal direction (L).

9. Method according to one of the preceding claims,
wherein the ceiling (1) comprises a plurality of decorative profiles (5) which are arranged next to one another along a transverse direction (Q) and each extend along a longitudinal direction (L) running perpendicularly to the transverse direction (Q).

10. Rail vehicle comprising
- an interior space (10) for accommodating passengers, wherein the interior space has a ceiling,
- a window (2) via which it is possible to look into the interior space (10) from outside the rail vehicle,
- a luminaire (3) which illuminates a region of the interior space (10) during operation, wherein the luminaire (3) is directed towards the ceiling (1) in such a way that the light from the luminaire (3) exits from the rail vehicle via the window (2),
- means for detecting the occupancy rate,
- a control apparatus (7) which is connected in a signal-transmitting manner to the luminaire (3), wherein
- the luminaire (3) and the control apparatus (7) are designed such that a method according to one of the preceding claims can be carried out using them.

## Revendications

1. Procédé pour faire fonctionner un luminaire (3), dans lequel
- le luminaire (3) est disposé dans un espace (10) intérieur d'un véhicule ferroviaire et éclaire, en fonctionnement, une partie de l'espace (10) intérieur,
- le véhicule ferroviaire comprend une fenêtre (2), par laquelle on peut de l'extérieur du véhicule ferroviaire voir dans l'espace (10) intérieur,
- l'espace (10) intérieur a un plafond (1),
- on détermine un degré d'occupation de l'espace (10) intérieur par des voyageurs, et
- on fait fonctionner le luminaire (3) en fonction du degré d'occupation déterminé, dans lequel la lumière émise par le luminaire (3) est représentative du degré d'occupation de l'espace (10) intérieur,
**caractérisé en ce que**
- la lumière émise en fonctionnement par le luminaire (3) sort en partie du véhicule ferroviaire par le fenêtre (2) et est visible de l'extérieur du véhicule ferroviaire, et
- le luminaire (3) est dirigé sur le plafond (1), de manière à ce que la lumière émise par le luminaire (3) soit réfléchie sur le plafond (1) et sorte ensuite par la fenêtre (2) du véhicule ferroviaire.

2. Procédé suivant la revendication 1, dans lequel
- le luminaire (3) est conçu pour émettre de la lumière de couleurs différentes,
- des couleurs différentes sont associées à des degrés d'occupation différents de l'espace (10) intérieur,
- on fait fonctionner le luminaire (3) en fonction du degré d'occupation déterminé de l'espace (10) intérieur, de manière à ce que le luminaire (3) émette de la lumière de la couleur associée au degré d'occupation.

3. Procédé suivant la revendication 1 ou 2,
dans lequel on détermine, d'une manière automatisée, le degré d'occupation de l'espace (10) intérieur par des voyageurs.

4. Procédé suivant l'une des revendications précédentes, dans lequel
- la lumière émise par le luminaire (3) n'arrive pas directement sur la fenêtre (2),
- la partie éclairée par le luminaire (3) peut, par la fenêtre (2), être vue de l'extérieur du véhicule ferroviaire.

5. Procédé suivant l'une des revendications précédentes,
dans lequel on fait fonctionner le luminaire (3) de manière à signaler un chemin vers un autre espace intérieur du véhicule ferroviaire, dans lequel le degré d'occupation est plus petit que dans l'espace (10) intérieur, dans lequel est disposé le luminaire (3) .

6. Procédé suivant l'une des revendications 1 à 5,
dans lequel le plafond (1) a une partie (1a) incurvée de manière concave, sur laquelle le luminaire (3) est dirigé.

7. Procédé suivant l'une des revendications précédentes,
dans lequel le luminaire (3) est monté sur une paroi (6) latérale du véhicule ferroviaire.

8. Procédé suivant l'une des revendications précédentes,
dans lequel le luminaire (3) est oblong et comprend une pluralité de DEL rangées les unes derrières les autres suivant une direction (L) longitudinale.

9. Procédé suivant l'une des revendications précédentes,
dans lequel le plafond (1) comprend une pluralité de profilés (5) décoratifs, qui sont disposés les uns à côté des autres suivant une direction (Q) transversale et qui s'étendent chacun dans une direction (L) longitudinale perpendiculaire à la direction (Q) transversale.

10. Véhicule ferroviaire, comprenant
- un espace (10) intérieur de réception de voyageurs, l'espace intérieur ayant un plafond,
- une fenêtre (2) par laquelle on peut, de l'extérieur du véhicule ferroviaire, voir dans l'espace (10) intérieur,
- un luminaire (3), qui en fonctionnement éclaire une partie de l'espace (10) intérieur, dans lequel le luminaire (3) est dirigé sur le plafond (1), de manière à ce que de la lumière du luminaire (3) sorte du véhicule ferroviaire par la fenêtre (2),
- des moyens de détection du degré d'occupation,
- un dispositif (7) de commande, qui est relié en technique du signal au luminaire (3), dans lequel
- le luminaire (3) et le dispositif (7) de commande sont conçus pour pouvoir effectuer par eux un procédé suivant l'une des revendications précédentes.
